# FASCICULE DE BREVET EUROPEEN

(11) **EP 3 041 695 B1**
(45) Date de publication et mention de la délivrance du brevet: **12.07.2017**
(21) Numéro de dépôt: 14761331.9
(22) Date de dépôt: 04.09.2014
(51) Int. Cl.: B60H 1/00, B60H 1/34

(54) **ENSEMBLE LUMINEUX COMPORTANT UN DISPOSITIF OPTIQUE INTÉGRÉ DANS UN ENSEMBLE DE CLIMATISATION DE VÉHICULE AUTOMOBILE**
IN EINE KRAFTFAHRZEUG-KLIMAANLAGE INTEGRIERTE LEUCHTENARMATUR MIT EINER OPTISCHEN VORRICHTUNG
LIGHT ASSEMBLY COMPRISING AN OPTICAL DEVICE INTEGRATED INTO A MOTOR VEHICLE AIR-CONDITIONING ASSEMBLY

(30) Priorité: 05.09.2013 FR 1358482
(43) Date de publication de la demande: 13.07.2016
(73) Titulaire: Valeo Vision, 93012 Bobigny Cedex (FR)
(72) Inventeur: CAZENAVE, Philippe, F-59650 Villeneuve d'Ascq (FR); LETOUMELIN, Rémi, F-77700 Chessy (FR); BOIROUX, Nicolas, F-95270 Asnières sur Oise (FR)
(86) Numéro de dépôt international: PCT/EP2014/068813
(87) Numéro de publication internationale: WO 2015/032846

(56) Documents cités:
- EP-A2- 2 045 131
- JP-A- 2001 180 252
- JP-A- 2004 306 713
- US-A1- 2008 112 155
- US-A1- 2008 125 026
- US-A1- 2009 298 406

## Description

La présente invention a trait au domaine de l'éclairage et au domaine de la climatisation et elle concerne plus particulièrement un ensemble lumineux comportant un dispositif optique intégré dans un ensemble de climatisation de véhicule automobile.

De nos jours, les véhicules automobiles commercialisés sont pour la plupart munis d'ensemble de climatisation, qui permet à l'utilisateur de commander un apport d'air froid ou chaud selon la température qu'il souhaite obtenir et la température réelle de l'habitacle.

Classiquement, l'ensemble de climatisation enregistre la requête de l'utilisateur et la compare à une mesure de la température pour déterminer un différentiel de température et adapter une instructions de commande de distribution d'air en conséquence. Si le différentiel de pression est positif, c'est-à-dire que l'utilisateur souhaite obtenir une température supérieure à la température de l'habitacle, de l'air chaud est envoyé dans les conduites de climatisation pour alimenter l'habitacle via l'une ou l'autre des buses de sortie d'air réparties dans le véhicule. Inversement, si le différentiel de pression est négatif, c'est-à-dire que l'utilisateur souhaite obtenir une température inférieure à la température de l'habitacle, de l'air froid est envoyé dans les conduites de climatisation.

Dernièrement, on a cherché à apporter une information visuelle complémentaire à l'utilisateur pour améliorer son ressenti du bon fonctionnement de la climatisation. La demanderesse a déposé le même jour une demande de brevet dans laquelle il est décrit qu'on procède à une diffusion de rayons lumineux conjointement à la mise en marche de la climatisation, ces rayons lumineux produisant une certaine couleur dont le choix dépend des conditions de fonctionnement de l'ensemble de climatisation.

Le document JP 2004 306713 décrit en outre un ensemble lumineux comportant un dispositif optique adapté à être monté sur le chemin d'une conduite de climatisation.

La présente invention se place dans ce contexte et a pour objet de proposer un ensemble lumineux qui soit peu coûteux et qui soit à la fois simple à mettre en oeuvre et simple à intégrer dans l'ensemble de climatisation.

A cet effet, l'invention propose un ensemble lumineux comportant un dispositif optique adapté à être monté sur le chemin d'une conduite de climatisation d'un véhicule automobile, ledit dispositif optique comportant des premiers et deuxièmes moyens de fixation respectivement à l'une et l'autre de ses extrémités axiales, pour la fixation dudit dispositif à un tuyau d'arrivée d'air et à un tube de raccordement solidaire d'une buse de sortie d'air. Le dispositif optique comporte par ailleurs un élément optique. Cet élément optique est adapté à recevoir par une face d'entrée les rayons de lumière émis par au moins une source de lumière, notamment disposée à l'extérieur de la conduite de climatisation, et à diffuser lesdits rayons de lumière par une face de sortie tournée vers l'intérieur de ladite conduite de climatisation.

Si on le souhaite, l'élément optique peut être un élément de guide optique. Si on le souhaite, l'élément de guide optique peut être de forme annulaire et d'axe de révolution confondu à celui de la conduite de climatisation à l'endroit du montage dudit dispositif. On entend par forme annulaire une forme partiellement voire totalement annulaire. Dans ce cas, les rayons de lumière sont guidés dans l'élément de guide optique depuis cette face d'entrée jusqu'à la face de sortie, par des réflexions internes totales successives.

En variante, l'élément optique peut être un un élément dioptrique comportant une face de réflexion entre la face d'entrée et la face de sortie et agencée pour réfléchir par réflexion interne totale les rayons de lumière issus de la face d'entrée vers la face de sortie. Le cas échéant, l'élément optique peut être de forme annulaire et d'axe de révolution confondu à celui de la conduite de climatisation à l'endroit du montage dudit dispositif.

On comprend que les premiers et deuxièmes moyens de fixation sont agencés sur le chemin de la conduit de climatisation de manière à permettre la circulation, notamment de façon étanche, de la totalité de l'air du tuyau d'arrivé d'air jusqu'au tube de raccordement.

Ainsi, on réalise avec un dispositif optique unique une double fonction d'illumination interne d'une conduite de climatisation, et d'interconnexion des éléments de cette conduite, ce qui a pour effet d'intégrer des fonctions et de permettre un positionnement précis et facile à mettre en oeuvre des sources de lumière nécessaire à la fonction d'illumination interne des conduites de climatisation, recherchée pour fournir à l'utilisateur une information visuelle complémentaire du ressenti qu'il peut avoir classiquement du bon fonctionnement de sa climatisation.

Selon des caractéristiques de l'invention, la face d'entrée est logée à l'extérieur de la conduite de climatisation définie par le tuyau d'arrivée d'air et par le tube de raccordement, notamment en étant sensiblement perpendiculaire audit axe de révolution, et la face de sortie est inclinée par rapport au plan de la face d'entrée et tournée vers l'intérieur de ladite conduite de climatisation. Cet agencement permet l'illumination interne des conduites de climatisation sans devoir intégrer pour cela l'intégralité de l'ensemble lumineux dans la conduite, ce qui poserait des problèmes de montage et de raccordement au module de commande de l'ensemble de climatisation.

Selon un agencement particulier de l'invention, la face de sortie est orientée de manière à ce que les rayons adaptés à la traverser par réfraction soient dirigées vers l'intérieur de la conduite de climatisation et principalement vers l'intérieur du tube de raccordement.

Selon un agencement différent, la face de sortie est orientée de manière à ce que les rayons adaptés à la traverser par réfraction soient dirigées vers l'intérieur de la conduite de climatisation et principalement vers l'intérieur du tuyau d'arrivée d'air. Ainsi, on s'assure de procéder à un éclairage indirect.

Dans ces deux agencements, l'angle d'orientation de la face de sortie dépend de la géométrie de la conduite de climatisation et en particulier de la longueur de celle-ci. Et la face de sortie, de forme annulaire, peut présenter un diamètre moyen supérieur ou inférieur au diamètre interne du tube de raccordement. On comprend que dans le cas où la face de sortie présente un diamètre moyen supérieur, celle-ci est escamotée.

Selon l'un ou l'autre de ces agencements, le dispositif optique est emmanché de sorte que les premiers moyens de fixation coopèrent avec le tube de raccordement, respectivement le tuyau d'arrivée d'air tandis que les deuxièmes moyens de fixation coopèrent avec le tuyau d'arrivée d'air, respectivement le tube de raccordement.

L'élément optique porte les premiers moyens de fixation. Il pourra en outre porter les deuxièmes moyens de fixation.

Selon une caractéristique de l'invention, les premiers moyens de fixation prennent la forme d'une première paroi annulaire simple adaptée à être montée par emmanchement autour de l'extrémité amont du tube de raccordement de la sortie d'air ou autour de l'extrémité avale du tuyau d'arrivée d'air, ladite première paroi étant venue de matière avec l'élément optique en prolongeant axialement celui-ci à son extrémité libre. Dans le cas d'un élément optique de forme partiellement annulaire, l'extrémité libre peut être prolongée axialement, cette prolongation étant elle-même prolongée radialement autour de l'axe de révolution de la conduite de sorte à former la première paroi annulaire. Dans le cas d'un élément optique de forme totalement annulaire, l'extrémité libre est simplement prolongée axialement.

Les deuxièmes moyens de fixation peuvent eux prendre la forme de deux lèvres annulaires adaptées à enserrer l'extrémité avale du tuyau d'arrivée d'air ou l'extrémité amont du tube de raccordement de la sortie d'air, l'une des lèvres étant formée par un corps annulaire de l'élément de support tandis que l'autre lèvre est formée par une ailette venue de matière avec le corps et s'étendant axialement le long de celui-ci.

Selon un mode de réalisation de l'invention, l'élément optique porte les premiers moyens de fixation et les deuxièmes moyens de fixation, les premiers moyens de fixation prenant éventuellement la forme d'une première paroi annulaire simple adaptée à être montée par emmanchement autour de l'extrémité amont du tube de raccordement de la sortie d'air ou autour de l'extrémité avale du tuyau d'arrivée d'air, ladite première paroi étant venue de matière avec l'élément optique en prolongeant axialement celui-ci à son extrémité libre, les deuxièmes moyens de fixation prenant la forme d'une deuxième paroi annulaire simple adaptée de manière à ce que l'extrémité amont du tube de raccordement de la sortie d'air ou l'extrémité avale du tuyau d'arrivée d'air soit montée par emmanchement autour de ladite deuxième paroi, ladite deuxième paroi étant venue de matière avec l'élément optique en prolongeant axialement celui-ci au droit de la face de sortie. Dans le cas d'un élément optique de forme partiellement annulaire, l'extrémité de l'élément optique au droit de la face de sortie peut être prolongée axialement, cette prolongation étant elle-même prolongée radialement autour de l'axe de révolution de la conduite de sorte à former la première paroi annulaire. Dans le cas d'un élément optique de forme totalement annulaire, cette extrémité est simplement prolongée axialement

Selon une caractéristique de l'invention, l'ensemble lumineux comporte un élément de support associé à l'élément optique. Ce dernier pourra être rapporté autour de l'élément de support par collage. Dans ce cas, l'élément de support porte avantageusement un bossage en saillie radiale sur tout le pourtour de la paroi annulaire de l'élément de support, ledit bossage étant adapté à recevoir des moyens de collage de l'élément de guide optique. Et on peut prévoir que l'élément de support porte les deuxièmes moyens de fixation tandis que l'élément optique porte les premiers moyens de fixation.

Selon d'autres caractéristiques de l'invention, chaque source de lumière est formée par une diode électroluminescente montée sur une plaque de circuits imprimés qui présente une forme sensiblement annulaire et qui est rendue solidaire d'une collerette annulaire venue de matière avec l'élément de support de manière à être disposée en regard de la face d'entrée de l'élément optique. La diode peut être une diode RVB.

Selon un agencement particulier de l'élément de guide optique, celui-ci comporte une zone de réception, formée par une première portion annulaire à section droite, et une zone de distribution formée par une portion annulaire conique disposée dans le prolongement de la zone de réception. La zone de réception comporte une face externe et une face interne qui sont parallèles et qui définissent un chemin de guidage entre une face d'extrémité libre et la zone de distribution, qui comporte également une face externe et une face interne ainsi qu'une face d'extrémité, la face externe et la face interne de la zone de distribution prolongeant la face externe et la face interne de la zone de réception avec un angle d'inclinaison tel que les faces externe et interne de la zone de distribution s'étendent dans le sens du rapprochement vers l'axe commun au tuyau d'arrivée d'air et au tube de raccordement. La face d'extrémité de la zone de réception correspond à ladite face d'entrée et la face d'extrémité de la zone de distribution correspond à ladite face de sortie.

Selon une caractéristique de l'invention, lorsque l'élément de support porte un bossage comme décrit précédemment, c'est la face interne de la zone de distribution qui est rapportée sur le bossage de l'élément de support.

Cette face de sortie peut être striée. Ainsi, on favorise l'éclatement des rayons lumineux diffusés dans la conduite de ventilation et l'on favorise ainsi l'impression pour l'utilisateur d'une lumière diffuse.

L'élément optique est formé en P.M.M.A. tandis que l'élément de support est réalisé en polycarbonate (PC). Le choix du matériau utilisé pour l'élément optique ne tient compte que de considérations optiques alors que le matériau choisi pour l'élément de support est plus facile à travailler, de sorte que les moyens de fixation sont obtenus sans difficulté.

En outre, le dispositif optique peut comporter un capotage pour former logement dans lequel la source de lumière et l'élément optique sont protégés. Le capotage comporte une paroi axiale, qui s'étend axialement à distance de l'élément optique, et une paroi transversale qui s'emmanche autour du tube de raccordement.

L'invention concerne également un véhicule automobile dans lequel un ensemble de climatisation comporte un module de commande adapté à générer des instructions de commande de distribution d'air dans des conduites de climatisation réparties dans la structure du véhicule et comportant des tuyaux d'arrivée pour amener cet air vers des buses de sortie d'air vers l'habitacle. Le véhicule selon l'invention est spécifique en ce qu'il comporte au moins un ensemble lumineux tel que décrit ci-dessus, dans lequel un dispositif optique est monté dans le prolongement d'une part d'un tube de raccordement rendu solidaire d'une buse de sortie d'air et d'autre part d'un tuyau d'arrivée d'air pour réaliser leur interconnexion et permettre le passage continu de l'air vers les buses de sortie d'air, et dans lequel ce même dispositif optique est adapté par ailleurs à illuminer l'intérieur de la conduite de climatisation correspondante.

Selon une caractéristique de ce véhicule selon l'invention, la source de lumière est une diode électroluminescente rapportée sur une plaque de circuits imprimés qui comporte un microcontrôleur connecté au module de commande de l'ensemble de climatisation, notamment pour recevoir des instructions d'allumage de la diode électroluminescente en fonction de données centralisées par ledit module de commande.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une vue en perspective d'un ensemble lumineux selon l'invention comportant un dispositif optique monté entre un tube de raccordement d'une buse d'aération et un tuyau d'arrivée d'air ;
- la figure 2 est une vue similaire à celle de la figure 1, en coupe dans un plan vertical et longitudinal ;
- la figure 3 est une vue de côté, en coupe, de l'ensemble lumineux de la figure 1 selon un premier mode de réalisation, dans lequel le dispositif optique comporte un élément de guidage optique dont une face de sortie est inclinée vers la buse d'aération, légèrement en saillie vers l'intérieur du dispositif optique ;
- la figure 4 est une vue de côté, en coupe, de l'ensemble lumineux de la figure 1 selon un deuxième mode de réalisation, différent du mode de réalisation de la figure 3 en ce que la face de sortie est agencée en retrait de l'axe du dispositif optique ; et
- la figure 5 est une vue de côté, en coupe, de l'ensemble lumineux de la figure 1 selon un troisième mode de réalisation, particulier notamment en ce que le dispositif optique comporte un élément de guidage optique dont une face de sortie est orientée vers le tuyau d'arrivée d'air, à l'opposé de la buse de sortie d'air.

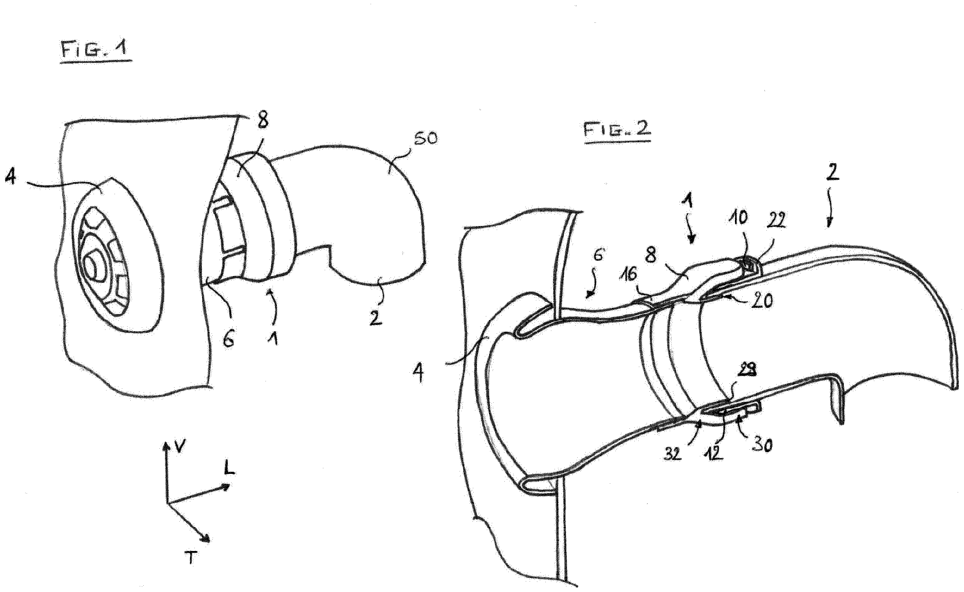

Dans la description qui va suivre, on adoptera à titre non limitatif une orientation longitudinale, verticale et transversale selon l'orientation traditionnellement utilisée dans l'industrie automobile et indiquée par le trièdre L, V, T reporté sur la figure 1.

Tel qu'illustré sur les figures, un ensemble lumineux selon l'invention comporte principalement un dispositif optique 1 adapté à être disposé dans un ensemble de climatisation d'un véhicule automobile, et notamment sur le chemin d'une conduite de climatisation en étant agencé entre un tuyau d'arrivée d'air 2 et une buse de sortie d'air dans l'habitacle du véhicule 4.

L'ensemble de climatisation comporte un module de commande, non représenté, qui assure le calcul de la température d'air à fournir dans l'habitacle, et il comporte des conduites de climatisation qui s'étendent notamment derrière la planche de bord du véhicule pour amener l'air vers des buses de sortie qui permettent la diffusion de l'air traité dans l'habitacle.

Les buses de sortie d'air 4 sont ici des buses à ailettes, mais on comprendra qu'elles peuvent prendre n'importe quelle forme en façade. Ces buses sont prolongées vers l'intérieur de la planche de bord par un tube de raccordement 6, que l'on dispose en regard du tuyau d'arrivée d'air 2 correspondant, les conduites de climatisation étant formées chacune par un tuyau d'arrivée d'air et par un tube de raccordement associé.

Le dispositif optique 1 est particulier notamment en ce qu'il forme un moyen facile à monter sur une conduite de climatisation pour former l'interconnexion entre le tuyau et les tube de cette conduite et en ce qu'il comporte un élément de guide optique 8, adapté à recevoir la lumière émise par une source de lumière 10 et à diffuser ladite lumière à l'intérieur du dispositif pour illuminer le tuyau d'arrivée d'air et la sortie d'air.

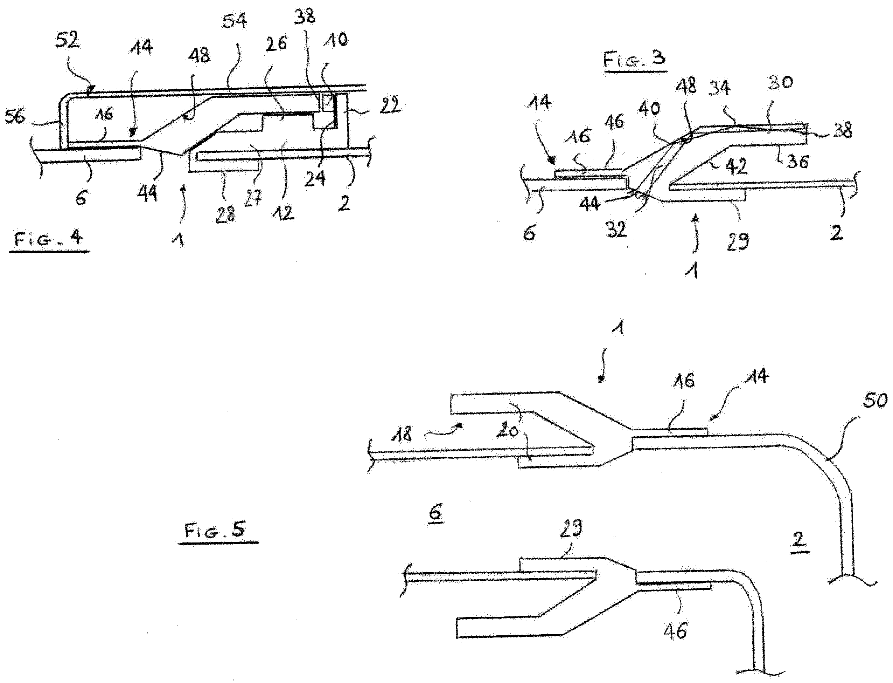

Tel que cela est visible sur la figure 4, le dispositif optique 1 peut comporter un élément support 12 de l'élément de guide optique 8. Ces deux éléments présentent une forme générale cylindrique de section annulaire et d'axe commun et confondu avec l'axe des tuyaux d'arrivée d'air et des tubes de raccordement. A une extrémité axiale 14, le dispositif optique porte des premiers moyens de fixation 16 adaptés à être emmanchés autour du tube de raccordement 6 de la buse de sortie d'air de climatisation, tandis qu'à l'extrémité axiale opposée 18, le dispositif optique porte des deuxièmes moyens de fixation 20 qui sont adaptés à être emmanchés sur l'extrémité avale d'un tuyau d'arrivée d'air 2.

L'élément de guide optique est rendu solidaire de l'élément de support, rapporté autour de l'élément de support sur la face externe de ce dernier. Ces deux éléments sont décalés axialement l'un par rapport à l'autre de sorte qu'une extrémité axiale de l'élément support n'est pas recouverte par l'élément de guide optique. Cette extrémité axiale dégagée est prolongée perpendiculairement, vers l'extérieur de l'élément de support, par une collerette 22 qui s'étend sur tout le pourtour circulaire du dispositif. La collerette est adaptée à porter une plaque de circuit imprimés 24 annulaire sur laquelle est fixée au moins une diode électroluminescente. La collerette s'étend perpendiculairement à l'axe du dispositif, de sorte que la diode qui y est fixée est adaptée à diffuser de la lumière selon un axe optique confondu avec l'axe commun du tuyau d'arrivée d'air et du tube de raccordement de la buse de sortie d'air. Il convient de noter que dans cet agencement la plaque de circuits imprimés se retrouve à l'extérieur de la conduite de ventilation.

Par ailleurs, l'élément de support comporte un bossage 26 en saillie radiale sur tout le pourtour du corps annulaire 27 de l'élément de support et sur lequel l'élément de guide optique est collé. Le bossage offre une surface de collage appropriée et il surélève l'élément de guide optique de telle sorte qu'une face d'entrée de cet élément de guide est disposée en regard de la collerette et de la diode qui y est fixée. L'élément de guide optique est formé en polyméthacrylate de méthyle (également défini sous l'abréviation P.M.M.A) et son collage, par exemple au moyen d'une colle époxy, peut nécessiter un nettoyage de la surface de support avant l'opération de collage. Dans ce contexte, le bossage permet de définir finement la surface à traiter préalablement au collage de l'élément de guide optique.

L'élément de support porte en outre les deuxièmes moyens de fixation qui prennent la forme de deux lèvres adaptées à enserrer l'extrémité avale du tuyau d'arrivée d'air. Une lèvre est formée par le corps annulaire de l'élément de support et une seconde lèvre est formée par une ailette 28 qui s'étend axialement le long dudit corps annulaire.

On comprendra que, dans le cas expliqué ci-après en variante où l'élément de guide optique n'est pas associé à un élément de support, les deuxièmes moyens de fixation pourront être formés par une deuxième paroi annulaire simple 29.

L'élément de guide optique comporte une zone de réception 30, formée par une première portion annulaire à section droite, et une zone de distribution 32 formée par une portion annulaire conique disposée dans le prolongement de la zone de réception.

La zone de réception comporte une face externe 34 et une face interne 36 qui sont parallèles et qui définissent un chemin de guidage entre une face d'extrémité libre 38 et la zone de distribution 32. La zone de réception a pour fonction de propager vers la zone de distribution les rayons lumineux qui entrent par la face d'entrée de l'élément de guide optique qui correspond à l'extrémité libre de la zone de réception. Elle est prolongée, à son extrémité opposée à la face d'entrée, par la zone de distribution.

Cette zone de distribution comporte également une face externe 40 et une face interne 42 ainsi qu'une face d'extrémité 44. La face externe est inclinée par rapport à la face externe de la zone de réception, dans le sens du rapprochement vers l'axe de la conduite de climatisation, c'est-à-dire dans le sens d'un rétrécissement du diamètre de la zone de distribution plus on s'éloigne de la zone de réception. La face interne est également inclinée par rapport à la face interne de la zone de réception, d'une inclinaison sensiblement équivalente à celle de la face externe.

Par ailleurs, la zone de distribution est prolongée axialement, au niveau de la jonction entre la face externe et la face d'extrémité, par une première paroi de section annulaire 46, de type manchon, qui forme les premiers moyens de fixation, ce manchon présentant un diamètre interne légèrement supérieur au diamètre du tube de raccordement de la buse de sortie d'air de manière à ce qu'il puisse par emmanchement permettre de rendre solidaire le dispositif optique avec ce tube de raccordement.

La zone de distribution a pour fonction de dévier les rayons lumineux en provenance de la zone de réception vers une face de sortie de l'élément de guide optique qui correspond à la face d'extrémité de la zone de distribution.

Tel que cela sera décrit plus en détail lors de la description du montage et du fonctionnement du dispositif, on constate que l'on peut identifier plusieurs faces fonctionnelles pour le guidage des rayons lumineux par l'élément de guide optique. Une face d'entrée est portée par la zone de réception tandis qu'une face de sortie est portée par la zone de distribution. De même, cette zone de distribution porte une face de renvoi 48, formée par la face externe. La face d'entrée est sensiblement perpendiculaire à l'axe du tuyau d'arrivée d'air pour faciliter l'entrée des rayons lumineux issus d'une source de lumière dans l'élément de guide optique, la face de renvoi dirige les rayons en sortie de la portion de guide à section droite pour les orienter vers la face de sortie puisque celle-ci n'est pas dans un plan parallèle à la face d'entrée, mais tournée vers l'intérieur du dispositif, en présentant un plan incliné par rapport à l'axe du tuyau d'arrivée d'air. On a représenté à titre d'exemple sur la figure 3 le trajet de deux rayons entre la face d'entrée et la face de sortie.

La forme conique de la zone de distribution et la dimension des faces externe et interne font que la face d'extrémité de la zone de distribution, c'est-à-dire la face de sortie du dispositif optique, présente une forme annulaire, inclinée, dont le diamètre moyen est inférieur à celui du tube de raccordement de la buse de sortie d'air.

On comprendra qu'il importe selon l'invention que la face de sortie soit inclinée par rapport à l'axe commun du tuyau d'arrivée d'air et du tube de raccordement de la buse de sortie d'air, de manière à ce que la lumière émise en sortie du guide optique en un endroit donné de la face de sortie ne soit pas dirigée directement vers la partie de la face de sortie diamétralement opposée. Il importe que les rayons lumineux émis en sortie du guide soient dirigés en biais pour connaitre une réflexion totale interne sur le tube de raccordement de la buse de sortie.

Dans ce contexte, la face de sortie pourra présenter une disposition différente de celle représentée de la figure 3, et par exemple présenter une disposition selon une première variante telle que représentée sur la figure 4, dans laquelle la face de sortie est escamotée en ce que le diamètre moyen est supérieur au diamètre intérieur du tube de raccordement de la buse de sortie d'air, ou encore présenter une disposition selon une deuxième variante telle que représentée sur la figure 5, dans laquelle la face de sortie est orientée en sens inverse, vers l'amont du tuyau d'arrivée d'air. On détermine l'amont et l'aval dans le tuyau d'arrivée d'air en fonction du sens de circulation d'air, vers la buse de sortie.

Dans la première variante, la face de sortie est ainsi escamotée et non directement visible par l'utilisateur. Lorsque la source de lumière est allumée, les rayons de lumière sortent par la face de sortie et il peut être intéressant en terme de rendu pour l'utilisateur de ne pas voir un anneau de lumière au contour défini mais une lumière plus diffuse remplissant toute la buse de sortie d'air.

Dans la deuxième variante, on recherche également cet effet d'une lumière indirecte, et on oriente les rayons lumineux vers un coude du tuyau d'arrivée d'air, pour que la réflexion totale interne après la sortie du guide optique soit faite au niveau de ce coude et que les rayons se dirigent ensuite vers la buse de sortie. On cherche ainsi à éclairer une face que l'utilisateur peut voir au fond du conduit. Par ailleurs, le coude est incliné de manière à ce que le tuyau d'arrivée d'air et le tube de raccordement soient alignés pour faciliter la mise en place du dispositif optique. Tel qu'illustré sur la figure 5, l'ensemble du guide optique a été retourné, avec la source de lumière qui émet dans le sens inverse du sens d'émission de la source de lumière dans le mode de réalisation principal et dans la première variante. On pourrait réaliser la même fonction en conservant la disposition des premiers modes de réalisation, et en orientant différemment la surface de réflexion totale interne et la face de sortie.

La face de sortie de l'élément de guide optique est avantageusement striée, pour que les rayons lumineux adaptés à sortir de l'élément de guide de lumière par réfraction au niveau de cette face de sortie soient éclatés en dehors du guide de lumière.

La source de lumière est formée par une diode électroluminescente disposée en regard de la face d'entrée de l'élément optique. Avantageusement, la source de lumière est formée par trois diodes de couleur rouge, verte et bleue, selon une disposition connue de diode électroluminescente RVB. La diode électroluminescente est pilotée, en allumage et en intensité, par un microcontrôleur monté sur la plaque de circuits imprimés. Dans le cas évoqué précédemment d'une diode RVB, les instructions de commande et d'intensité sont déterminées pour que les rayons lumineux en sortie de la diode soient de la couleur souhaitée.

Le dispositif comporte en outre un capotage 52 qui comporte une paroi axiale 54 et une paroi transversale 56 qui s'emmanche autour du tube de raccordement. Le capotage forme ainsi un logement dans lequel la source de lumière et l'élément de guide optique sont protégés.

On va maintenant décrire le montage du dispositif optique dans l'ensemble de climatisation d'un véhicule automobile, et le fonctionnement d'un tel ensemble muni du dispositif de l'invention, qui présente l'avantage de pouvoir être monté facilement et être prêt immédiatement à l'utilisation.

Le dispositif se monte tout d'abord du côté des buses de sortie d'air sur la planche de bord avant que celle-ci soit rapportée sur la structure du véhicule. On monte le dispositif optique par emmanchement sur l'extrémité amont du tube de raccordement par l'intermédiaire de la première zone de fixation. On peut mettre en place un dispositif pour chacune des buses de sortie d'air, ou seulement pour quelques-unes d'entre elles.

Puis on rapporte dans un deuxième temps la planche de bord de manière à faire correspondre chacune des buses avec un tuyau d'arrivée d'air correspondant. On monte alors le dispositif optique par emmanchement sur les conduites de climatisation par l'intermédiaire des deuxièmes moyens de fixation, et on raccorde simultanément le microcontrôleur, qui est embarqué sur la plaque de circuits imprimés solidaire du dispositif au niveau de la collerette de l'élément de support, à la connectique de sortie du module de commande de l'ensemble de climatisation.

Lorsque l'utilisateur touche au bouton de commande de climatisation, en demandant une température donnée, ou en passant une consigne de distribution d'air froid ou chaud, l'ensemble de climatisation procède à la délivrance d'un air à la température adéquate par les buses de sortie. Parallèlement, on prévoit d'allumer la diode portée par le dispositif optique selon l'invention pour illuminer la buse par laquelle l'air est prévu de sortir. A titre d'exemple, on allume une diode bleue spécifique, ou on allume une diode RVB de manière à ce qu'elle émette une lumière bleue, pour que l'utilisateur reçoive une information visuelle sur le type d'air soufflé par la climatisation, ou sur la température dans l'habitacle. Comme cela a pu être précisé auparavant, on pourra se reporter à la demande de brevet déposée le même jour par la demanderesse pour lire le détail du fonctionnement de l'ensemble de climatisation auquel on a associé un dispositif optique selon la présente invention. On y comprendra notamment comment le microcontrôleur associé à la diode est adapté à recevoir des informations provenant du module de commande de l'ensemble de climatisation pour piloter le déclenchement de la source de lumière, et, dans le cas d'une diode RVB, le choix de couleur de la lumière émise par modulation des trois sources de couleurs principales, ces instructions d'allumage de la source de lumière étant fonction de données centralisées par le module de commande.

La diode émet de la lumière qui pénètre par réfraction dans l'élément de guide optique dont la face d'entrée, plane, est disposée en regard de la diode. La lumière réfractée se propage dans l'élément de guide optique, initialement dans la zone de réception puis dans la zone de distribution.

La lumière se dirige vers la face externe de cette zone de distribution, qui forme une surface de renvoi permettant la réflexion totale interne des rayons en direction de la face de sortie. Les rayons sont alors réfractés pour se propager à l'intérieur du dispositif optique dans le tube de raccordement ou le tuyau d'arrivée d'air. L'inclinaison de la face de sortie permet aux rayons de se déplacer en direction de la buse de sortie d'air avec un angle donné par rapport à l'axe de cette buse de sortie, de telle sorte que les rayons se déplacent par réflexions successives à l'intérieur du tube de raccordement vers la buse de sortie d'air. Le revêtement éventuellement strié de la face de sortie facilite également par l'éclatement du faisceau lumineux ce déplacement des rayons par réflexions successives.

La description qui précède explique clairement comment l'invention permet d'atteindre les objectifs qu'elle s'est fixés et notamment de proposer un dispositif qui à la fois s'intègre facilement dans une conduite de climatisation en réalisant l'interconnexion entre les tuyaux d'arrivée d'air et les buses de sortie d'air et permet la mise en place d'une fonction d'éclairage de l'intérieur de cette conduite de climatisation. Cette intégration de fonction est particulièrement simple à fabriquer et à mettre en place. Le dispositif selon l'invention permet l'éclairage depuis l'intérieur des buses de sortie d'air, ce qui permet de proposer une indication additionnelle pour l'occupant du véhicule sur l'état de la climatisation. Et cet éclairage est obtenu par l'insertion du dispositif selon l'invention emmanché entre des tubes et des tuyaux existants par ailleurs. Il n'y a ainsi pas de d'usinage spécifique à réaliser sur la planche de bord pour loger les moyens lumineux. On comprendra en outre que l'on offre une possibilité au constructeur de véhicule automobile, qui ne souhaiterait pas implanter le dispositif optique, de monter à sa place un dispositif d'interconnexion de type manchon, sans guide optique intégré, entre le tuyau d'arrivée d'air et le tube de raccordement de la buse de sortie d'air.

Par ailleurs, la conception du dispositif optique tel qu'il vient d'être décrit permet une grande modularité, en ce qu'il est permis plusieurs orientations d'éclairage selon que l'on monte le dispositif dans un sens ou dans l'autre, et selon que l'on modifie ou non la taille et la forme de l'élément de guide optique, tout en conservant la forme et la taille de l'élément de support qui assure l'interconnexion.

Le fait que la plaque de circuits imprimés et le microcontrôleur embarqué soient situés sur le pourtour de la conduite de climatisation permet un raccordement facile du microcontrôleur au module de commande de l'ensemble de climatisation. L'ensemble lumineux selon l'invention combine l'avantage de cette disposition externe du microcontrôleur et celui de la disposition interne de la face de sortie de l'élément de guide optique pour illuminer l'intérieur des conduites de climatisation.

L'intégration de la plaque de circuits imprimés sur l'élément de support permet à l'installateur de réaliser facilement le branchement des composants électroniques nécessaire à la transmission des instructions de commande vers le dispositif, pour le déclenchement de tel ou tel type d'éclairage en fonction des conditions détectées relatives à la climatisation de l'habitacle.

Bien entendu, diverses modifications peuvent être apportées par l'homme du métier aux structures du dispositif optique, qui viennent d'être décrites à titre d'exemples non limitatifs, dès lors que le dispositif optique présente les parties fonctionnelles optiques telles qu'elles viennent d'être précisées, et dès lors que l'agencement du dispositif dans l'ensemble de climatisation permet de réaliser un éclairage intérieur des conduites de climatisation tout en participant à l'interconnexion des différents tubes et tuyaux composant ces conduites de climatisation.

Dans différentes variantes non représentées, on pourra par exemple prévoir séparément, ou en combinaison l'une de l'autre, de se passer du capotage rapporté par-dessus le dispositif optique, de réaliser autrement les moyens de fixation, ou encore de réaliser l'élément de support et l'élément de guide optique en une seule pièce.

Dans la variante selon laquelle le capotage n'est pas prévu, on prendra alors soin à l'inclinaison de la face externe de la zone de distribution pour que celle-ci soit une surface de réflexion totale interne pour l'ensemble des rayons provenant de la zone de réception, et qu'aucun des rayons lumineux ne se propage hors de la conduite de climatisation associée au dispositif optique. On comprend ainsi un rôle complémentaire du capotage, qui outre la protection offerte à la diode et l'élément de guide optique, assure également un fourreau pour éviter la diffusion aléatoire de rayons lumineux à l'extérieur du dispositif, par exemple au niveau du passage des rayons lumineux entre la diode et la face d'entrée.

Dans la variante selon laquelle les moyens de fixation sont différents, on pourra prévoir de réaliser les premiers et les deuxièmes moyens de fixation avec une paroi annulaire simple qui présente un diamètre légèrement supérieur ou inférieur à celui du tube ou du tuyau avec lequel le dispositif coopère par emmanchement. Ceci est notamment intéressant dans le cadre de la variante selon laquelle l'élément de guide optique n'est pas associé à un élément de support. Dans ce cas, le dispositif optique dans son intégralité est formé d'un matériau transparent de type P.M.M.A et les moyens de fixation sont également réalisés en ce matériau. Si cette variante présente l'avantage de diminuer le nombre de pièces composant le dispositif optique, il implique également de simplifier au maximum les formes des pièces, le P.M.M.A étant un matériau aux très bonnes propriétés optiques mais relativement fragile.

## Revendications

1. Ensemble lumineux comportant un dispositif optique (1) adapté à être monté sur le chemin d'une conduite de climatisation d'un véhicule automobile, ledit dispositif optique comportant un élément optique (8), l'élément optique étant adapté à recevoir par une face d'entrée (38) les rayons de lumière émis par au moins une source de lumière (10), notamment disposée à l'extérieur de la conduite de climatisation, et à diffuser lesdits rayons de lumière par une face de sortie (44) tournée vers l'intérieur de ladite conduite de climatisation,
**caractérisé en ce que** ledit dispositif optique comporte des premiers (16) et deuxièmes (20) moyens de fixation respectivement à l'une et l'autre de ses extrémités axiales (14, 18), pour la fixation dudit dispositif à une tuyau d'arrivée d'air (2) et à un tube de raccordement (6) solidaire d'une buse de sortie d'air (4).

2. Ensemble lumineux selon la revendication 1, **caractérisé en ce que** ladite face d'entrée (38) est logée à l'extérieur de la conduite de climatisation définie par le tuyau d'arrivée d'air (2) et par le tube de raccordement (6), notamment en étant sensiblement perpendiculaire audit axe de révolution.

3. Ensemble lumineux selon la revendication 1 ou 2, **caractérisé en ce que** ladite face de sortie (44) est inclinée par rapport au plan de la face d'entrée et tournée vers l'intérieur de ladite conduite de climatisation.

4. Ensemble lumineux selon l'une des revendications 1 à 3, **caractérisé en ce que** le dispositif optique (1) est emmanché de sorte que les premiers moyens de fixation (16) coopèrent avec le tube de raccordement (6) tandis que les deuxièmes moyens de fixation (20) coopèrent avec le tuyau d'arrivée d'air (2).

5. Ensemble lumineux selon l'une des revendications 1 à 4, **caractérisé en ce que** le dispositif optique (1) est emmanché de sorte que les premiers moyens de fixation (16) coopèrent avec le tuyau d'arrivée d'air (2) tandis que les deuxièmes moyens de fixation (20) coopèrent avec le tube de raccordement (6).

6. Ensemble lumineux selon l'une des revendications précédentes, dans lequel l'élément optique est un élément de guide optique (8) de forme annulaire et d'axe de révolution confondu à celui de la conduite de climatisation à l'endroit du montage dudit dispositif,

7. Ensemble lumineux selon l'une des revendications précédentes, **caractérisé en ce que** l'élément optique (8) porte les premiers moyens de fixation (16).

8. Ensemble lumineux selon l'une des revendications 6 ou 7, **caractérisé en ce que** les premiers moyens de fixation (16) prennent la forme d'une première paroi annulaire (46) simple adaptée à être montée par emmanchement autour de l'extrémité amont du tube de raccordement (6) de la sortie d'air ou autour de l'extrémité avale du tuyau d'arrivée d'air (2), ladite première paroi étant venue de matière avec l'élément optique (8) en prolongeant axialement celui-ci à son extrémité libre.

9. Ensemble lumineux selon l'une des revendications 6 à 8, **caractérisé en ce que** l'élément optique (8) porte les deuxièmes moyens de fixation (20),

10. Ensemble lumineux selon la revendication 9, **caractérisé en ce que** les deuxièmes moyens de fixation (20) prennent la forme d'une deuxième paroi annulaire (29) simple adaptée de manière à ce que l'extrémité amont du tube de raccordement (6) de la sortie d'air ou l'extrémité avale du tuyau d'arrivée d'air (2) soit montée par emmanchement autour de ladite deuxième paroi, ladite deuxième paroi étant venue de matière avec l'élément optique (8) en prolongeant axialement celui-ci au droit de la face de sortie.

11. Ensemble lumineux selon la revendication 6 en combinaison avec l'une des revendications 7 à 8, **caractérisé en ce qu'**il comporte un élément de support (12) de l'élément de guide optique, cet élément de support étant de forme annulaire et d'axe de révolution identique à celui de l'élément de guide optique (8), et **en ce que** l'élément de support (12) porte les deuxièmes moyens de fixation (20).

12. Ensemble lumineux selon la revendication 11, **caractérisé en ce que** les deuxièmes moyens de fixation (20) prennent la forme de deux lèvres annulaires (27, 28) adaptées à enserrer l'extrémité avale du tuyau d'arrivée d'air (2) ou l'extrémité amont du tube de raccordement (6) de la sortie d'air, l'une desdites lèvres étant formée par un corps annulaire (27) de l'élément de support (12) et l'autre desdites lèvres étant formée par une ailette (28) venue de matière avec ledit corps annulaire et qui s'étend le long de celui-ci.

13. Ensemble lumineux selon l'une des revendications 6 à 12, **caractérisé en ce qu'**il comporte un élément de support (12) de l'élément de guide optique, cet élément de support étant de forme annulaire et d'axe de révolution identique à celui de l'élément de guide optique (8).

14. Ensemble lumineux selon la revendication précédente, **caractérisé en ce que** la au moins une source de lumière (10) est formée par une diode électroluminescente montée sur une plaque de circuits imprimés (24) qui présente une forme sensiblement annulaire et qui est rendue solidaire d'une collerette annulaire (22) venue de matière avec l'élément de support (12) de manière à être disposée en regard de la face d'entrée (38) de l'élément de guide optique (8).

15. Ensemble lumineux selon l'une des revendications 13 et 14, **caractérisé en ce que** l'élément de support (12) et l'élément de guide optique (8) sont formés par deux pièces distinctes, l'élément de guide optique étant rapporté autour de l'élément de support par collage.

16. Ensemble lumineux selon l'une des revendications 13 à 15, **caractérisé en ce que** l'élément de support (12) porte un bossage (26) en saillie radiale surtout le pourtour de la paroi annulaire de l'élément de support, ledit bossage étant adapté à recevoir des moyens de collage de l'élément de guide optique (8).

17. Véhicule automobile dans lequel un ensemble de climatisation comporte un module de commande adapté à générer des instructions de commande de distribution d'air dans des conduites de climatisation réparties dans la structure du véhicule, lesdites conduites comportant des tuyaux d'arrivée pour amener cet air vers des buses de sortie d'air vers l'habitacle, **caractérisé en ce qu'**il comporte au moins un ensemble lumineux selon l'une des revendications précédentes, dans lequel un dispositif optique (1) est monté dans le prolongement d'une part d'un tube de raccordement (6) rendu solidaire d'une buse de sortie d'air (4) et d'autre part d'un tuyau d'arrivée d'air (2) pour réaliser leur interconnexion et permettre le passage continu de l'air vers les buses de sortie d'air, ledit dispositif optique étant adapté par ailleurs à illuminer l'intérieur de la conduite de climatisation correspondante.

## Patentansprüche

1. Leuchtenarmatur, umfassend eine optische Vorrichtung (1), die dazu vorgesehen ist, auf dem Weg einer Klimaleitung eines Kraftfahrzeugs montiert zu sein, wobei die optische Vorrichtung ein optisches Element (8) umfasst, wobei das optische Element dazu vorgesehen ist, über eine Eintrittsfläche (38) die Lichtstrahlen, die von mindestens einer Lichtquelle (10) entsandt werden, die insbesondere außerhalb der Klimaleitung angeordnet ist, zu empfangen und die Lichtstrahlen über eine Austrittfläche (44), die zum Inneren der Klimaleitung gewandt ist, zu verbreiten,
**dadurch gekennzeichnet, dass** die optische Vorrichtung erste (16) und zweite (20) Befestigungsmittel an dem einen bzw. anderen ihrer axialen Enden (14, 18) zur Befestigung der Vorrichtung an einem Lufteinlassrohr (2) und an einem Anschlussrohr (6), das mit einer Luftablassdüse (4) verbunden ist, umfasst.

2. Leuchtenarmatur nach Anspruch 1, **dadurch gekennzeichnet, dass** die Eintrittsfläche (38) außerhalb der Klimaleitung, die durch das Lufteinlassrohr (2) und das Anschlussrohr (6) definiert ist, angeordnet ist, wobei sie im Wesentlichen senkrecht auf die Umdrehungsachse vorgesehen ist.

3. Leuchtenarmatur nach Anspruch 1 oder 2, **dadurch gekennzeichnet, dass** die Austrittsfläche (44) in Bezug zur Ebene der Eintrittsfläche geneigt und zum Inneren der Klimaleitung gewandt ist.

4. Leuchtenarmatur nach einem der Ansprüche 1 bis 3, **dadurch gekennzeichnet, dass** die optische Vorrichtung (1) eingepresst ist, so dass die ersten Befestigungsmittel (16) mit dem Anschlussrohr (6) zusammenwirken, während die zweiten Befestigungsmittel (20) mit dem Lufteinlassrohr (2) zusammenwirken.

5. Leuchtenarmatur nach einem der Ansprüche 1 bis 4, **dadurch gekennzeichnet, dass** die optische Vorrichtung (1) eingepresst ist, so dass die ersten Befestigungsmittel (16) mit dem Lufteinlassrohr (2) zusammenwirken, während die zweiten Befestigungsmittel (20) mit dem Anschlussrohr (6) zusammenwirken.

6. Leuchtenarmatur nach einem der vorhergehenden Ansprüche, bei der das optische Element ein optisches Leiterelement (8) von ringförmiger Form und mit einer Umdrehungsachse ist, die mit jener der Klimaleitung an der Stelle der Montage der Vorrichtung zusammenfällt.

7. Leuchtenarmatur nach einem der vorhergehenden Ansprüche, **dadurch gekennzeichnet, dass** das optische Element (8) die ersten Befestigungsmittel (16) trägt.

8. Leuchtenarmatur nach einem der Ansprüche 6 oder 7, **dadurch gekennzeichnet, dass** die ersten Befestigungsmittel (16) die Form einer ersten einfachen ringförmigen Wand (46) annehmen, die geeignet ist, durch Einpressen um das stromaufwärtige Ende des Anschlussrohrs (6) des Luftauslasses oder um das stromabwärtige Ende des Lufteinlassrohrs (2) montiert zu werden, wobei die erste Wand mit dem optischen Element (8) aus einem Stück ist, wobei sie dieses axial an seinem freien Ende verlängert.

9. Leuchtenarmatur nach einem der Ansprüche 6 bis 8, **dadurch gekennzeichnet, dass** das optische Element (8) die zweiten Befestigungsmittel (20) trägt.

10. Leuchtenarmatur nach Anspruch 9, **dadurch gekennzeichnet, dass** die zweiten Befestigungsmittel (20) die Form einer zweiten einfachen ringförmigen Wand (29) annehmen, die dazu vorgesehen ist, dass das stromaufwärtige Ende des Anschlussrohrs (6) des Luftaustritts oder das stromabwärtige Ende des Lufteinlassrohrs (2) durch Einpressen um die zweite Wand montiert wird, wobei die zweite Wand mit dem optischen Element (8) aus einem Stück ist, wobei sie dieses im rechten Winkel zur Austrittsfläche axial verlängert.

11. Leuchtenarmatur nach Anspruch 6 in Kombination mit einem der Ansprüche 7 bis 8, **dadurch gekennzeichnet, dass** sie ein Stützelement (12) des optischen Leiterelements umfasst, wobei dieses Stützelement von ringförmiger Form und mit einer Umdrehungsachse ist, die mit jener des optischen Leiterelements (8) identisch ist, und dass das Stützelement (12) die zweiten Befestigungsmittel (20) trägt.

12. Leuchtenarmatur nach Anspruch 11, **dadurch gekennzeichnet, dass** die zweiten Befestigungsmittel (20) die Form von zwei ringförmigen Lippen (27, 28) annehmen, die geeignet sind, das stromabwärtige Ende des Lufteinlassrohrs (2) oder das stromaufwärtige Ende des Anschlussrohrs (6) des Luftaustritts einzuspannen, wobei eine der Lippen von einem ringförmigen Körper (27) des Stützelements (12) und die andere der Lippen von einem Flügel (28) gebildet ist, der mit dem ringförmigen Körper aus einem Stück ist und sich entlang desselben erstreckt.

13. Leuchtenarmatur nach einem der Ansprüche 6 bis 12, **dadurch gekennzeichnet, dass** sie ein Stützelement (12) des optischen Leiterelements umfasst, wobei dieses Stützelement von ringförmiger Form und mit einer Umdrehungsachse identisch mit jener des optischen Leiterelements (8) ist.

14. Leuchtenarmatur nach dem vorhergehenden Anspruch, **dadurch gekennzeichnet, dass** die mindestens eine Lichtquelle (10) von einer Leuchtdiode gebildet ist, die auf einer gedruckten Leiterplatte (24) montiert ist, die eine im Wesentlichen ringförmige Form aufweist, und die mit einem ringförmigen Kragen (22), der mit dem Stützelement (12) aus einem Stück ist, verbunden ist, um gegenüber der Eintrittsfläche (38) des optischen Leiterelements (8) angeordnet zu sein.

15. Leuchtenarmatur nach einem der Ansprüche 13 und 14, **dadurch gekennzeichnet, dass** das Stützelement (12) und das optische Leiterelement (8) von zwei getrennten Teilen gebildet sind, wobei das optische Leiterelement um das Stützelement durch Kleben aufgesetzt ist.

16. Leuchtenarmatur nach einem der Ansprüche 13 bis 15, **dadurch gekennzeichnet, dass** das Stützelement (12) einen radial auf dem gesamten Umfang der ringförmigen Wand des Stützelements vorspringenden Wulst (26) trägt, wobei der Wulst dazu vorgesehen ist, Klebemittel für das optische Leiterelement (8) aufzunehmen.

17. Kraftfahrzeug, bei dem eine Klimaanlage ein Steuermodul umfasst, das geeignet ist, Steuerbefehle zur Verteilung von Luft in Klimaleitungen, die in der Struktur des Fahrzeugs verteilt sind, zu erzeugen, wobei die Leitungen Einlassrohre umfassen, um diese Luft zu Düsen zur Luftabgabe in den Fahrgastraum zu leiten, **dadurch gekennzeichnet, dass** es mindestens eine Leuchtenarmatur nach einem der vorhergehenden Ansprüche umfasst, bei der eine optische Vorrichtung (1) in der Verlängerung einerseits eines Anschlussrohrs (6), das mit einer Luftauslassdüse (4) verbunden ist, und andererseits einem Lufteinlassrohr (2) montiert ist, um ihre Zusammenschaltung durchzuführen und den kontinuierlichen Durchgang der Luft zu den Luftauslassdüsen zu ermöglichen, wobei die optische Vorrichtung überdies geeignet ist, das Innere der entsprechenden Klimaleitung zu beleuchten.

## Claims

1. Light assembly comprising an optical device (1) adapted to be mounted on the path of an air-conditioning duct of a motor vehicle, said optical device comprising an optical element (8), the optical element being adapted to receive through an input face (38) the light rays emitted by at least one light source (10), notably a source positioned outside the air-conditioning duct, and to diffuse said light rays through an output face (44) directed toward the inside of said air-conditioning duct,
**characterized in that** said optical device comprises first (16) and second (20) fastening means at one and the other of its axial ends (14, 18) respectively, for fastening said device to an air inlet pipe (2) and to a connecting tube (6) fixed to an air outlet nozzle (4).

2. Light assembly according to Claim 1, **characterized in that** said input face (38) is housed outside the air-conditioning duct defined by the air inlet pipe (2) and the connecting tube (6), being notably substantially perpendicular to said axis of revolution.

3. Light assembly according to Claim 1 or 2, **characterized in that** said output face (44) is inclined relative to the plane of the input face and is directed toward the inside of said air-conditioning duct.

4. Light assembly according to any of Claims 1 to 3, **characterized in that** the optical device (1) is fitted in such a way that the first fastening means (16) interact with the connecting tube (6), while the second fastening means (20) interact with the air inlet pipe (2).

5. Light assembly according to any of Claims 1 to 4, **characterized in that** the optical device (1) is fitted in such a way that the first fastening means (16) interact with the air inlet pipe (2), while the second fastening means (20) interact with the connecting tube (6).

6. Light assembly according to any of the preceding claims, wherein the optical element is an optical guide element (8) of annular shape, having an axis of revolution coinciding with that of the air-conditioning duct at the mounting location of said device.

7. Light assembly according to any of the preceding claims, **characterized in that** the optical element (8) carries the first fastening means (16).

8. Light assembly according to either of Claims 6 and 7, **characterized in that** the first fastening means (16) take the form of a first simple annular wall (46) adapted to be mounted by fitting around the upstream end of the connecting tube (6) of the air outlet or around the downstream end of the air inlet pipe (2), said first wall being made in one piece with the optical element (8) and prolonging the latter axially at its free end.

9. Light assembly according to any of Claims 6 to 8, **characterized in that** the optical element (8) carries the second fastening means (20).

10. Light assembly according to Claim 9, **characterized in that** the second fastening means (20) take the form of a second simple annular wall (29) adapted so that the upstream end of the connecting tube (6) of the air outlet or the downstream end of the air inlet pipe (2) is mounted by fitting around said second wall, said second wall being made in one piece with the optical element (8) and prolonging the latter axially at the level of the output face.

11. Light assembly according to Claim 6, in combination with one of Claims 7 and 8, **characterized in that** it comprises a support element (12) of the optical guide element, this support element being of annular shape and having an axis of revolution identical to that of the optical guide element (8), and **in that** the support element (12) carries the second fastening means (20).

12. Light assembly according to Claim 11, **characterized in that** the second fastening means (20) take the form of two annular lips (27, 28) adapted to grip the downstream end of the air inlet pipe (2) or the upstream end of the connecting tube (6) of the air outlet, one of said lips being formed by an annular body (27) of the support element (12), the other of said lips being formed by a fin (28) made in one piece with said annular body and extending along the latter.

13. Light assembly according to any of Claims 6 to 12, **characterized in that** it comprises a support element (12) of the optical guide element, this support element being of annular shape and having an axis of revolution identical to that of the optical guide element (8).

14. Light assembly according to the preceding claim, **characterized in that** the at least one light source (10) is formed by a light-emitting diode mounted on a printed circuit board (24) which is of substantially annular shape and is fixed to an annular collar (22) made in one piece with the support element (12), so as to be positioned facing the input face (38) of the optical guide element (8).

15. Light assembly according to either of Claims 13 and 14, **characterized in that** the support element (12) and the optical guide element (8) are formed by two separate pieces, the optical guide element being attached around the support element by gluing.

16. Light assembly according to any of Claims 13 to 15, **characterized in that** the support element (12) has a radially projecting ridge (26) around the whole periphery of the annular wall of the support element, said ridge being adapted to receive means for the gluing of the optical guide element (8).

17. Motor vehicle, in which an air-conditioning assembly comprises a control module adapted to generate instructions for controlling the air distribution in air-conditioning ducts which are distributed in the structure of the vehicle, said ducts having inlet pipes for guiding this air toward nozzles for the outlet of the air toward the passenger compartment, **characterized in that** it comprises at least one light assembly as claimed in any of the preceding claims, in which an optical device (1) is fitted in the prolongation of, on the one hand, a connecting tube (6) fixed to an air outlet nozzle (4), and, on the other hand, an air inlet pipe (2), to provide an interconnection thereof and allow the continuous passage of the air toward the air outlet nozzles, said optical device also being adapted to illuminate the inside of the corresponding air-conditioning duct.
